# EUROPEAN PATENT APPLICATION

(11) **EP 0 573 979 A2**
(43) Date of publication of application: **15.12.1993**
(21) Application number: 93109286.0
(22) Date of filing: 09.06.1993
(51) Int. Cl.: A01K 15/02

(54) **Device for stimulating precocial birds**

(30) Priority: 09.06.1992 IL 102150
(71) Applicant: GALLUS LTD., Rehovot (IL)
(72) Inventor: Gvaryahu, Gadi, Rehovot (IL)
(74) Representative: Modiano, Guido, Dr.-Ing.

(57) **Abstract**

A precocial bird stimulating device which includes a precocial bird stimulating object (10) and an object suspending element (12) which serves to suspend the precocial bird stimulating object (10), for example, from the roof of the bird housing. The object (10) may be configured to rotate in response to bird contact and preferably includes one or more protrusions (14) arranged so as to cause the device (10) to rotate in response to bird contact therewith. The object may further include an opening (18) so that precocial birds can see through the object (10). The object (10) may also features provisions for linking two or more such devices together.

## Description

### FIELD AND BACKGROUND OF THE INVENTION

Imprinting is a known phenomenon in young precocial birds. Most young precocial birds are capable of becoming attached to moving objects in their environment other than their actual keeper or parent.

Israel Patent No. 75081 describes methods for raising poultry using the imprinting phenomenon. For example, imprinting is described as useful in effectively concentrating poultry in a desire vicinity, as when it is desired to clean their living space, and in effectively transferring poultry to a cage or transportation system in combination with a colored object such as a blue plastic box.

A publication entitled "The long expression of filial imprinting in the domestic chick (Gallus domesticus) and the involvement of gonadal hormones", (Gabi Gvaryahu, Ph.D. dissertation, Rehovot faculty of Agriculture, Hebrew University of Jerusalem, 1986) discloses use of a blue bottle as an imprinting object for turkeys. Applications include facilitating aggregation of birds for inoculation or transportation and providing a calming or tranquilizing effect, particularly forbids under stress.

Use of imprinting objects for transferring broiler chicks from place to place is described in Gvaryahu et al,
"Research note application of the filial imprinting phenomenon to broiler chicks at a commercial farm", Poultry Science, 66, 1564 - 1566, 1987. The imprinting object employed was a plastic box painted blue and red, having loud speakers attached thereto.

Behavioral and production effects of imprinting are document in Gvaryahu et al, "Education and production filial imprinting, environmental enrichment and music application effect s on behavior and performance of meat strain chicks", Poultry Science,68,211 - 217, 1989. Gvaryahu et al employed as an imprinting object a blue plastic box containing speakers from which red gloves were hung at chick eye level.

U.S. Patent 4,913,092 to Gvaryahu et al discloses a behavior in precocial birds by combining filial imprinting, environmental enrichment and music. The imprinting object employed was a blue plastic box containing a loudspeaker associated with a tape recorder and having red gloves hanging therefrom at chick eye level.

Toys for poultry are known. For example, Agro Top Ltd., pecking toy which is suspended in layer cages.

### SUMMARY OF THE INVENTION

The present invention seeks to provide an improved object useful in handling and enhancing the environment of precocial birds, and methods for employing such object.

There is thus provided in accordance with a preferred embodiment of the present invention a rotating precocial bird stimulation device including a precocial bird stimulating object configured to rotate in response to bird contact and an object suspending element operative to suspend the precocial bird stimulation object.

Further in accordance with a preferred embodiment of the present invention, the precocial bird stimulate object includes at least one protrusion arranged transversely to an axis defined by the object suspending element, which creates a moment of rotation in response to bird contact therewith.

There is also provided in accordance with another preferred embodiment of the present invention, the precocial bird stimulating object includes an opening, and an object suspending element operative to suspend the precocial bird stimulating object so that precocial bird can see through the opening.

There is further provided in accordance with still another preferred embodiment of the present invention, a precocial bird stimulating device including at least one precocial bird stimulating object, and at least one link for linking the precocial bird stimulating object to at least one similar precocial bird stimulating object.
Further in accordance with a preferred embodiment of the present invention, the bird stimulating device also includes an object suspending element operative to suspend the precocial bird stimulating object.

Still further in accordance with a preferred embodiment of the present invention, the link and the precocial bird stimulation object are integrally formate.

Additionally in accordance with a preferred embodiment of the present invention, the object suspending element and the precocial bird stimulating object are integrally formed.

There is also provided in accordance with still a further preferred embodiment of the present invention, a method for stimulating precocial birds including the steps of suspending a first precocial bird stimulation object configured to be linked to a similar precocial bird stimulating object to the first precocial bird stimulating device to the growing size of the precocial birds.

There is also provided in accordance with yet a further preferred embodiment of the present invention, a method for imprinting including the step of providing a precocial bird stimulating object which is configured to rotate in response to bird contact, and arranging the precocial bird stimulating object to allow bird contact therewith and consequent rotation thereof.

There is further provideD in accordance with yet another preferred embodiment of the present invention, a method for imprinting including the steeps of providing a precocial bird stimulating object defining an opening, and arranging the precocial bird stimulating object to allow birds to see through the opening.

There is further provided in accordance with still a further preferred embodiment of the present invention, a method for assembling precocial birds including the steeps of arranging a precocial bird stimulating object configured to be linked to a similar precocial bird stimulating object in each of a plurality of locations, thereby to define a plurality of precocial bird stimulating objects, and, when it is desired to assemble the precocial birds at a given location, aggregating and linking together the plurality of precocial bird stimulating objects at the given location, thereby to provide a relatively large imprinting object which is visible to precocial birds at a distance.

Further in accordance with a preferred embodiment of the present invention, the precocial bird stimulating object is configured for stimulation of turkeys.

### BRIEF DESCRIPTION OF THE DRAWINGS

The present invention will be understood and appreciated from the following detailed description, taken in conjunction with the drawings in which:
FIG. 1 is a pictorial illustration of an object useful in handling and enhancing the environment of precocial birds, constructed and operative in accordance with a preferred embodiment of the present invention; and
FIG. 2 is a pictorial illustration of a plurality of linked objects, each of which may be identical to the object of Figure 1.

### DESCRIPTION OF THE PREFERRED EMBODIMENTS

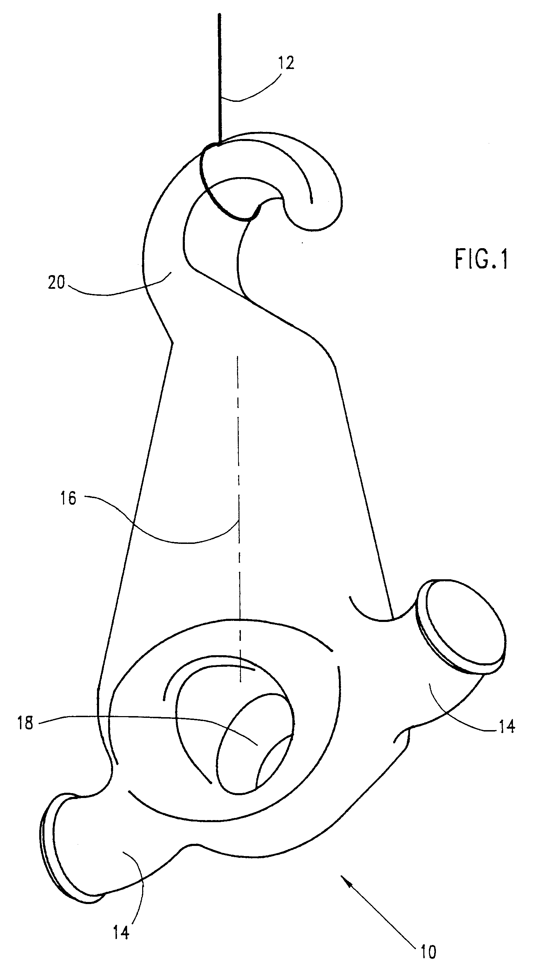

Reference is now made to Figure 1 which illustrates a precocial bird attention drawing object **10** useful in handling and enhancing the environment of precocial birds, constructed and operative in accordance with a preferred embodiment of the present invention, The object may be formed of any suitable material such as polypropylene using any suitable method such as blowing. The object is preferably hollow and of a color or colors which are attractive and stimulating for precocial birds, such as blue.

Although the object **10** may be employed in conjunction with an auditory stimulus generator such as a tape recorder and associated loudspeaker, this need not be the case. The object **10** tends to attract pecking and the pecking sounds themselves may serve as an auditory stimulus for the precocial birds.

The object is typically suspended at approximately bird eye level in the living quarters of the precocial birds, using any suitable suspension arrangement such as a string or cord **12**.

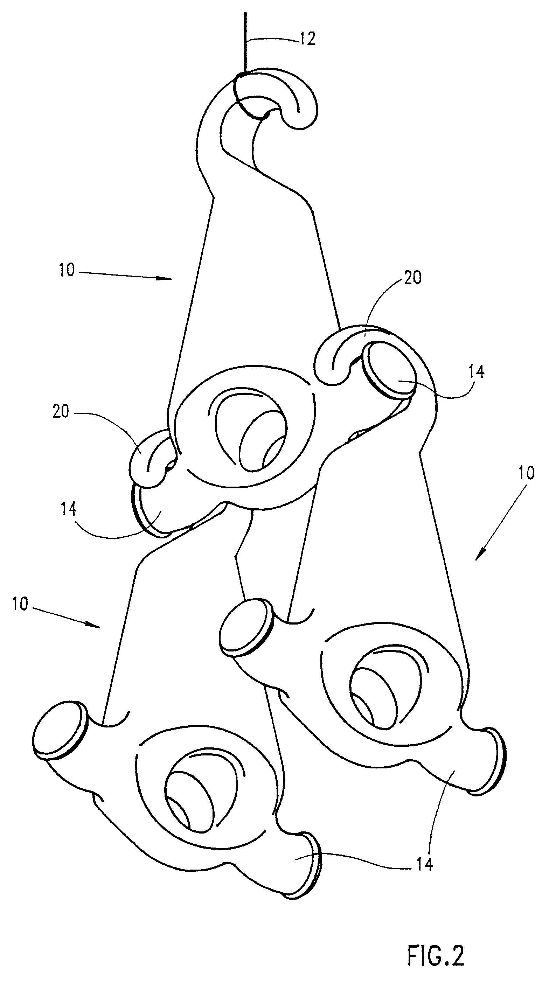

As shown, the configuration of the precocial bird attention drawings object **10** preferably comprises at least one an preferably all of the following elements:
a. At least one protrusion **14** which, when pecked or otherwise touched by the precocial birds, causes rotation of the object **10** about an axis **16** defined by the cord **12**. The rotation of the attention drawing object is believed to increase the interest of the precocial birds in the object.
b. At least one opening **18** which allows the precocial birds to see through the attention drawing object **10**. This feature is also believe to increase the interest of the precocial birds in the object.
c. A device for linking a plurality of attention drawing objects **10**, such as a hook **20** configured to make with a protrusion **14** or opening **18** or a similar device **10**, as best seen in Figure 2.

It is appreciated that the precocial bird attention drawing objects of Figures 1 and 2 may facilitate raising of precocial birds in various ways, such as any of the methods for employing similar objects described in the publications discussed in the Background section, the disclosures of which are hereby incorporated by reference.

While the invention has been described with respect to a limited number of embodiments, it will be appreciated that many variations, modifications and other applications of the invention may be made. Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A precocial bird stimulating device comprising:
(a) a precocial bird stimulating object; and
(b) an object suspending element operative to suspend said precocial bird stimulating object.

2. The device of claim 1 wherein said precocial bird stimulating object is configured to rotate in response to bird contact.

3. The device of claim 1 wherein said precocial bird stimulating object includes at least one protrusion, arranged transversely to an axis of rotation defined by the object suspending element, which creates a moment of rotation in response to bird contact therewith.

4. The device of claim 1 wherein said precocial bird stimulating object includes an opening so that precocial birds can see through said opening.

5. The device of claim 1 wherein said precocial bird stimulating object includes a link for linking said precocial bird stimulating object to another of said precocial bird stimulating objects.

6. The device of claim 5 wherein said link is integrally formed with said precocial bird stimulating object.

7. The device of claim 1 wherein said object suspending element and said precocial bird stimulating object are integrally formed.

8. The device of claim 1 wherein said precocial bird stimulating object is at least partly blue.

9. A method for stimulating precocial birds comprising the steps of: suspending a precocial bird stimulating object in the vicinity of the birds.

10. The method of claim 9 wherein said precocial bird stimulating object is configured to rotate in response to bird contact.
